# FASCICULE DE BREVET EUROPEEN

(11) **EP 1 166 040 B1**
(45) Date de publication et mention de la délivrance du brevet: **26.11.2008**
(21) Numéro de dépôt: 00915256.2
(22) Date de dépôt: 30.03.2000
(51) Int. Cl.: G01B 11/16, G01D 5/353, G01L 1/24, G01M 11/08

(54) **EXTENSOMETRE A RESEAU DE BRAGG ET PROCEDE DE FABRICATION DE CET EXTENSOMETRE**
BRAGG-GITTER-DEHNUNGSMESSER UND VERFAHREN ZUR HERSTELLUNG DIESES DEHNUNGSMESSERS
BRAGG NETWORK EXTENSOMETER AND METHOD FOR THE PRODUCTION OF SAID EXTENSOMETER

(30) Priorité: 01.04.1999 FR 9904084
(43) Date de publication de la demande: 02.01.2002
(73) Titulaire: COMMISSARIAT A L'ENERGIE ATOMIQUE, 75015 Paris (FR)
(72) Inventeur: BUGAUD, Michel, F-92500 Rueil (FR); MAGNE, Sylvain, F-92260 Fontenay-aux-Roses (FR); DEWYNTER-MARTY, Véronique, F-91190 Gif-sur-Yvette (FR); FERDINAND, Pierre, F-78800 Houilles (FR)
(74) Mandataire: Brykman, Georges
(86) Numéro de dépôt international: PCT/FR2000/000806
(87) Numéro de publication internationale: WO 2000/060312

(56) Documents cités:
- EP-A- 0 438 757
- WO-A-95/14917
- US-A- 4 477 725
- US-A- 4 636 638
- US-A- 5 767 411
- FRANK A ET AL: "Characterization of embedded optical fiber Bragg grating sensors" RELIABILITY OF PHOTONICS MATERIALS AND STRUCTURES. SYMPOSIUM, RELIABILITY OF PHOTONICS MATERIALS AND STRUCTURES. SYMPOSIUM, SAN FRANCISCO, CA, USA, 13-16 APRIL 1998, pages 397-402, XP000853898 1998, Warrendale, PA, USA, Mater. Res. Soc, USA ISBN: 1-55899-437-8

## Description

### DOMAINE TECHNIQUE

La présente invention concerne un extensomètre à réseau Bragg ainsi qu'un procédé de fabrication de cet extensomètre.

Elle est notamment utilisable dans le domaine du génie civil, pour la surveillance d'ouvrages d'art et de bâtiments.

L'invention permet de mesurer des déformations relatives jusqu'à des niveaux aussi petits que la microdéformation (une microdéformation étant une déformation pour laquelle la variation relative de longueur ΔL/L est égale à 10⁻⁶).

### ÉTAT DE LA TECHNIQUE ANTÉRIEURE

En ce qui concerne les transducteurs à réseau de Bragg on pourra consulter les documents [1] à [4] qui sont mentionnés à la fin de la présente description.

On sait aussi qu'un extensomètre comprend un corps d'épreuve qui est rendu solidaire de la structure à surveiller (structure naturelle, comme par exemple une montagne, ou une structure artificielle, comme par exemple un ouvrage d'art ou un bâtiment) de telle manière que les déformations de cette structure soient transmises le plus fidèlement possible au corps d'épreuve.

Un transducteur permettant de mesurer ces déformations est fixé à ce corps d'épreuve.

En tant que transducteur, il est connu d'utiliser une jauge à fil, qui est associée à un corps d'épreuve formé, par exemple, par un tube métallique rempli d'un matériau tel que la magnésie, ce matériau étant traversé par le fil, ou une jauge à cordes vibrantes ou un transformateur différentiel linéaire ou une fibre optique qui est alors associée à un corps d'épreuve formé par un tube métallique ou un fer à béton et comprenant éventuellement une saignée latérale dans laquelle est collée la fibre.

Ces transducteurs connus présentent des inconvénients.

Une jauge à fil subit un fluage non négligeable par rapport au corps d'épreuve associé et la distance entre les points d'ancrage permettant de rendre le corps d'épreuve solidaire de la structure à surveiller, distance qui est appelée « longueur d'intégration » ou « longueur de base de l'extensomètre », est réduite à quelques centimètres.

Une jauge à cordes vibrantes est encombrante, nécessite des étalonnages et la distance entre les points d'ancrage est inférieure à environ 30 cm.

Un transformateur différentiel linéaire est volumineux et coûteux, nécessite un nombre élevé de connexions et la distance entre les points d'ancrage est inférieure à environ 1 mètre.

Une jauge à fibre optique associée à un tube métallique subit également un fluage non négligeable par rapport à ce tube métallique.

Il en est de même pour une jauge à fibre associée à un fer à béton. De plus une telle jauge ne permet qu'une mesure ponctuelle car elle ne comporte pas deux points d'ancrage mais un ancrage continu qui est dû aux aspérités du fer à béton et qui est affecté par la dilatation différentielle du fer par rapport au béton.

EP 0438757 décrit un agencement de capteurs à réseaux de Bragg multiplexés, répartis sur une fibre optique. US 5767411 décrit un dispositif pour renforcer la déformation dans les capteurs intrinsèques à fibres optiques et emballer ces capteurs pour des environnements inhospitaliers. US 4636638 décrit un système optique de détection de fissures à distance, comportant des fibres optiques. L'article de Frank et al., Reliability of photonics materials and structures symposium, San Francisco, 13-16 April 1998, pages 397-402, décrit la caractérisation de capteurs à réseaux de Bragg à fibres optiques enrobées.

### EXPOSÉ DE L'INVENTION

La présente invention a pour objet un extensomètre dont le transducteur comprend au moins un réseau de Bragg formé sur une fibre optique, transducteur dont le fluage par rapport au corps d'épreuve de l'extensomètre est très inférieur au fluage qui se produit dans les extensomètres connus, mentionnés plus haut.

De façon précise, la présente invention a pour objet un extensomètre conforme à la revendication 1.

Chaque moyen d'ancrage comprend par exemple un élément mécanique percé qui est traversé par le jonc et rendu rigidement solidaire de celui-ci, par exemple par sertissage.

La fibre optique peut être en matière plastique ou en silice.

Cette fibre optique peut comprendre une gaine protectrice.

Selon un mode de réalisation préféré de l'extensomètre objet de l'invention, le jonc est en matière plastique.

Cette matière plastique peut contenir des moyens de renforcement.

Ces moyens de renforcement sont par exemple des fibres de verre.

L'extensomètre objet de l'invention peut comprendre en outre deux embouts de protection respectivement placés aux deux extrémités du corps d'épreuve et destinés à la protection mécanique de ces extrémités.

La présente invention concerne aussi un procédé de fabrication de l'extensomètre objet de l'invention, procédé dans lequel le jonc est formé autour de la fibre optique par co-extrusion.

Il faut bien entendu que le le matériau à partir duquel on forme le jonc soit chimiquement et physiquement compatible avec la fibre optique de manière à permettre la co-extrusion.

L'invention possède tous les avantages qui sont liés aux jauges à réseau de Bragg (notamment l'absence de dérive dans le temps, la précision et les aptitudes métrologiques qui en découlent, ainsi que le faible coût).

On consultera les documents [1] à [4] mentionnés plus haut où un certain nombre d'avantages de telles jauges sont mentionnés.

De plus, l'utilisation de la fibre optique conduit à une insensibilité à l'environnement électromagnétique et à une souplesse de mise en oeuvre.

L'intérêt de l'invention réside aussi dans sa nature modulaire et versatile qui est adaptée aux exigences d'incorporation, de longueur de base et de compatibilité mécanique avec les structures-hôtes, que celles-ci soient naturelles (le sol par exemple) ou artificielles (par exemple un bâtiment en béton).

### BRÈVE DESCRIPTION DES DESSINS

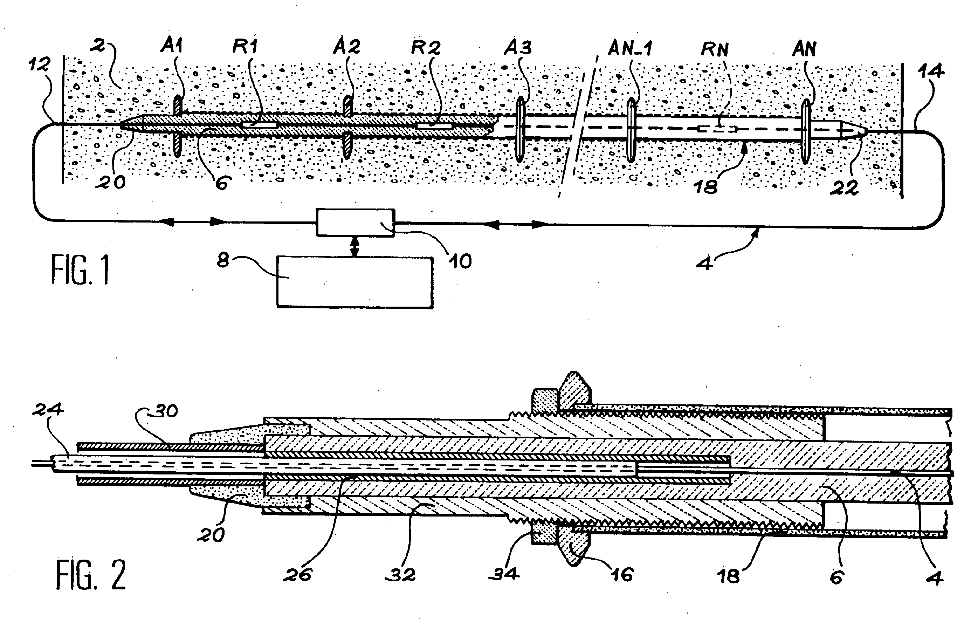

La présente invention sera mieux comprise à la lecture de la description d'exemples de réalisation donnés ci-après, à titre purement indicatif et nullement limitatif, en faisant référence aux dessins annexés sur lesquels :
◆ la figure 1 est une vue en coupe longitudinale schématique d'un mode de réalisation particulier de l'extensomètre objet de l'invention, et
◆ la figure 2 est une vue en coupe longitudinale schématique d'une extrémité de l'extensomètre de la figure 1.

### EXPOSÉ DÉTAILLÉ DE MODES DE RÉALISATION PARTICULIERS

L'extensomètre conforme à l'invention, qui est schématiquement représenté en coupe longitudinale sur la figure 1, est destiné à mesurer les déformations (contractions ou dilatations) d'un matériau-hôte qui, dans l'exemple représenté, est un ouvrage d'art en béton.

On voit sur la figure 1 la partie en béton 2 de cet ouvrage dont on veut étudier les déformations au moyen de cet extensomètre.

Ce dernier comprend une fibre optique 4 de préférence monomode, par exemple en plastique ou en silice.

Dans le coeur de cette fibre optique est formé (par photo-inscription) au moins un réseau de Bragg.

Dans l'exemple représenté la fibre optique comprend plusieurs réseaux de Bragg notés R1, R2 ... RN.

L'extensomètre de la figure 1 comprend aussi un corps d'épreuve noyé dans le béton et comprenant un jonc 6 qui enrobe une partie de la fibre optique contenant les réseaux de Bragg et s'étend le long de cette partie.

Le jonc est en matière plastique. Il est par exemple formé à partir d'une résine époxy ou de polyester.

On verra d'ailleurs dans la suite un procédé permettant de fabriquer ce jonc autour de la fibre (procédé dit de co-extrusion).

Ce jonc peut, si on le souhaite, contenir des moyens de renforcement de la matière plastique dont il est fait.

Ces moyens de renforcement sont par exemple des fibres, ou mèches, de verre ou de carbone ou d'aramide.

On précise que la fibre optique peut être munie d'une gaine protectrice par exemple en une matière plastique telle que le polyimide mais, comme on le verra dans la description de la figure 2, cette gaine protectrice peut être enlevée sur la plus grande partie de la fibre qui se trouve dans le jonc.

On voit sur la figure 1 des moyens de mesure 8 permettant « d'interroger » les réseaux de Bragg et de mesurer les déformations subies par le béton.

Ces moyens de mesure 8 sont prévus pour envoyer dans la fibre optique 4 des lumières de longueurs d'onde différentes (par exemple autant de longueurs d'onde qu'il y a de réseaux de Bragg).

Toute déformation du béton est transmise à un réseau de Bragg par l'intermédiaire du jonc 6. Ce réseau de Bragg modifie alors la lumière qui lui correspond et cette lumière retourne aux moyens de mesure 8 par l'intermédiaire de la fibre optique et la déformation du béton est déterminée par ces moyens de mesure à partir de la lumière ainsi modifiée.

Dans l'exemple représenté les moyens de mesure 8 sont reliés à la fibre optique par l'intermédiaire d'un commutateur optique 10 permettant d'alterner l'interrogation (envoi et récupération de lumière) des réseaux de Bragg, cette interrogation ayant lieu alternativement par un côté 12 de la fibre optique puis par l'autre côté 14 de cette fibre et ainsi de suite.

Cependant dans un mode de réalisation plus simple (non représenté) on peut interroger les réseaux de Bragg par un seul côté de la fibre optique, l'autre côté étant libre c'est-à-dire non relié à l'extensomètre.

Dans un autre mode de réalisation non représenté on peut envoyer les lumières dans les réseaux de Bragg par un côté de la fibre optique et récupérer des lumières éventuellement modifiées par l'autre côté de la fibre optique pour mesurer les déformations du béton.

L'extensomètre de la figure 1 comprend aussi, pour chaque réseau de Bragg, deux moyens d'ancrage destinés à ancrer le corps d'épreuve dans le matériau hôte, le béton par exemple. Ces deux moyens d'ancrage sont rendus rigidement solidaires du jonc 6 et placés de part et d'autre du réseau de Bragg qui leur correspond.

Dans l'exemple représenté on utilise autant de moyens d'ancrage qu'il y a de réseaux de Bragg plus un et ces moyens d'ancrage sont respectivement notés A1, A2, A3 ... AN-1 et AN.

Chaque moyen d'ancrage, sauf les deux moyens d'ancrage respectivement placés aux deux extrémités du corps d'épreuve, est donc commun à deux réseaux de Bragg. Par exemple le moyen d'ancrage A2 est commun aux réseaux de Bragg R1 et R2.

Chaque moyen d'ancrage comprend un élément mécanique percé (rondelle) 16 (figure 2) qui est traversé par le jonc 6 et rendu rigidement solidaire de ce dernier comme on le verra dans la description de la figure 2.

L'extensomètre de la figure 1 comprend en outre un revêtement 18 qui recouvre le jonc 6 et s'étend entre les moyens d'ancrage.

Ce revêtement 18 est prévu pour empêcher le béton de se lier au jonc 6. Il est choisi de manière à ne pas perturber les mesures par suite de dilatations différentielles.

Ce revêtement consiste par exemple en un tube en polychlorure de vinyle ou en matériau silicone entourant la périphérie du jonc entre deux moyens d'ancrage adjacents.

L'extensomètre de la figure 1 comprend aussi deux embouts de protection 20 et 22 respectivement placés aux deux extrémités du corps d'épreuve et destinés à la protection mécanique de ces extrémités.

Le choix de la matière plastique dont on forme le jonc 6 et qui est éventuellement renforcée dépend des exigences de rigidité requises. On choisit cette rigidité en fonction par exemple de la granulométrie du béton.

La distance entre deux moyens d'ancrage adjacents représente la longueur d'intégration (encore appelée « longueur de base » ou « base de mesure » ou tout simplement « base »).

Chaque longueur de base est prédéfinie lors de la fabrication de l'extensomètre en fonction de l'utilisation de ce dernier.

L'utilisation du revêtement 18 entre deux moyens d'ancrage adjacents permet de s'assurer que les déformations subies par le réseau de Bragg qui se trouve entre ces deux moyens d'ancrage correspondent bien à l'intégrale des déformations induites par la somme des contraintes présentes entre ces deux moyens d'ancrage.

On peut aussi réaliser un extensomètre ne comprenant aucun moyen d'ancrage et muni ou non d'un revêtement tel que le revêtement 18. Un tel extensomètre permet de faire des mesures ponctuelles dans chaque zone où se trouve un réseau un Bragg. Un tel extensomètre peut d'ailleurs comprendre un seul réseau de Bragg.

En variante, un extensomètre conforme à l'invention peut comprendre une ou plusieurs longueurs de base très courtes, de l'ordre de quelques centimètres, chaque longueur de base étant délimitée par deux moyens d'ancrage convenablement dimensionnés qui sont donc proches l'un de l'autre, avec un revêtement tel que le revêtement 18 entre ces deux moyens d'ancrage. Un tel extensomètre permet encore de faire une mesure ponctuelle dans chaque zone délimitée par deux moyens d'ancrage.

La figure 2 montre une extrémité de l'extensomètre de la figure 1 en coupe longitudinale schématique.

On voit l'extrémité du jonc 6 ainsi que la fibre optique 4 qui sort de cette extrémité du jonc.

On précise que l'autre extrémité du corps d'épreuve est identique à l'extrémité que l'on voit sur la figure 2.

Dans l'exemple représenté sur cette figure 2 la fibre optique a été privée de sa gaine protectrice 24 dans la majeure partie du jonc. Cette gaine protectrice subsiste dans l'extrémité représentée sur la figure 2 et à l'extérieur du corps d'épreuve (comme on le voit sur la gauche de la figure 2).

Un tube 26 par exemple en plastique ou en polymère s'étend à partir dé l'extrémité du jonc sur une certaine longueur et recouvre ainsi une partie de la gaine de protection 24 de la fibre 4 ainsi qu'une partie de la fibre privée de gaine protectrice.

A la suite de l'extrémité du jonc (partie gauche de la figure) est prévu un câble flexible 30 par exemple en PVC ou en plastique, voire métallique, qui s'étend sur une certaine longueur de la gaine protectrice de la fibre.

Un fourreau 32 par exemple en bronze s'étend à l'extrémité du jonc sur une certaine longueur jusqu'à un niveau où il se trouve autour de la partie de fibre optique privée de gaine protectrice.

Ce fourreau est serti au jonc.

On voit aussi sur la figure 2 l'embout de protection 20 correspondant à cette extrémité. Cet embout est par exemple en silicone.

Une partie de cet embout est emmanchée sur le jonc et recouverte par une extrémité du fourreau.

Cette partie de l'embout comprise entre le jonc et le fourreau est en outre collée à ces derniers.

On voit aussi que cet embout s'étend sur une partie du câble flexible 30.

On voit de plus le tube 18 qui s'étend au-dessus du fourreau et l'un des moyens d'ancrage. Ce dernier est constitué par une rondelle métallique 16 qui est emmanchée sur une extrémité de ce tube 18 et qui est maintenue dans cette position grâce à un écrou 34 vissé sur le fourreau qui comporte un filetage à cet effet.

Dans une variante non représentée, on utilise en tant que moyen d'ancrage une rondelle de grand diamètre extérieur, par exemple en tôle perforée, et l'on maintient cette rondelle de grand diamètre entre deux écrous vissés sur le fourreau comportant un filetage à cet effet. Cette variante est utilisable même si l'on n'utilise pas le tube 18 ou si ce tube 18 est remplacé par une couche ayant la même fonction que ce tube, c'est-à-dire prévue pour empêcher une liaison entre le béton et le jonc.

En ce qui concerne le ou les moyens d'ancrage qui ne se trouvent pas aux extrémités du jonc 6, chacun de ces moyens d'ancrage peut être une rondelle (non représentée) prévue pour être emmanchée par ses deux côtés sur les deux tubes qui sont du genre du tube 18 et sont de part et d'autre de cette rondelle.

Dans une variante (non représentée) on utilise un fourreau intermédiaire fileté que l'on peut sertir sur le jonc et sur lequel on place la rondelle alors maintenue en position entre deux écrous vissés sur ce fourreau.

On explique maintenant la formation du jonc autour de la fibre optique.

On utilise pour ce faire un procédé connu sous le nom de Spirglass dont l'utilisation est connue pour fabriquer des objets cylindriques.

Ce procédé consiste en une co-extrusion : dans la machine de co-extrusion on prévoit une bobine de fibre optique et l'on forme autour de cette fibre optique le jonc à partir d'une résine époxy. Si l'on veut renforcer la résine époxy on prévoit également dans la machine plusieurs bobines de fibres de verre (qui se déroulent au fur et à mesure de la fabrication du fourreau).

Les documents cités dans la présente description sont les suivants :
[1] EP 0713084 A, Micro-système optique de type rosette de jauges de contraintes à guides diélectriques, pour la mesure d'une contrainte longitudinale en structure plane, invention de Pierre Ferdinand, Sylvain Magne et Stéphane Rougeault
[2] Demande internationale PCT/FR 98/00563, numéro de publication internationale WO 98/43119, Dispositif de démultiplexage des raies spectrales contenues dans un spectre optique, invention de Sylvain Magne, Pierre Ferdinand et Gilles Grand
[3] Demande internationale PCT/FR 98/01118, numéro de publication internationale WO 98/55835, Dispositif de lecture des raies spectrales contenues dans un spectre optique, invention Sylvain Magne, Pierre Ferdinand et Gilles Grand
[4] EP 0887619 A Système d'alimentation et de transmission pour capteur à fibre optique, intégré dans une structure amagnétique, et module d'alimentation et de réception associé, invention de Michel Bugaud, François de Dieuleveult, Jean-Claude Lecompte et Sylvain Magne.

## Revendications

1. Extensomètre comprenant :
- une fibre optique (4) dans laquelle est formé au moins un réseau de Bragg (R1 ... RN), et
- un corps d'épreuve destiné à être noyé dans un matériau-hôte (2) toute déformation du matériau-hôte étant ainsi transmise à ce réseau de Bragg par l'intermédiaire du corps d'épreuve ce réseau de Bragg étant alors apte à modifier une lumière se propageant dans la fibre, la déformation du matériau-hôte étant déterminée à partir de la lumière modifiée,
**caracterisé en ce que** le corps d'épreuve est un jonc (6) qui enrobe une partie de la fibre optique contenant ce réseau de Bragg et transmet directement la déformation du matériau-bôte au réseau de Bragg. cet extensomètre comprenant en outre, pour chaque réseau de Bragg, deux moyens d'ancrage (A1 ... AN) destinés à ancrer le corps d'épreuve dans le matériau-hôte, ces deux moyens d'ancrage étant rendus rigidement solidaires du jonc (6) et placés de part et d'autre du réseau de Bragg leur correspondant l'extensomètre comprenant en outre un revêtement (18) qui recouvre le jonc et s'étend entre les deux moyens d'ancrage placés de part et d'autre du réseau de Bragg, ce revêtement étant apte à empêcher le matériau-hôte (2) de se lier au jonc (6).

2. Extensomètre selon la revendication 1, dans lequel chaque moyen d'ancrage comprend un élément mécanique percé (16) qui est traversé par le jonc (6) et rendu rigidement solidaire de celui-ci.

3. Extensomètre selon l'une quelconque des revendications 1 at 2, dans lequel la fibre optique (4) est en matière plastique ou en silice.

4. Extensomètre selon l'une quelconque des revendications 1 à 3, dans lequel la fibre optique (4) comprend une gaine protectrice.

5. Extensomètre selon l'une quelconque des revendications 1 à 4, dans lequel le jonc (6) est en matière plastique.

6. Extensomètre selon la revendication 5, dans lequel cette matière plastique contient des moyens de renforcement.

7. Extensomètre selon la revendication 6, dans lequel ces moyens de renforcement sont des fibres de verre.

8. Extensomètre selon l'une quelconque des revendications 1 à 7, comprenant en outre deux embouts de protection (20, 22) respectivement placés aux deux extrémités du corps d'épreuve et destinés à la protection mécanique de ces extrémités.

9. Procédé de fabrication de l'extensomètre selon l'une quelconque des revendications 1 à 8, dans lequel le jonc (6) est formé autour de la fibre optique (4) par co-extrusion.

## Claims

1. Extensometer comprising:
- an optical fibre (4) in which at least one Bragg grating (R1 ... RN) is formed, and
- a test body intended to be embedded in a host material (2), any deformation of the host material thus being transmitted to this Bragg grating by means of the test body, this Bragg grating then being capable of modifying light propagating in the fibre, the deformation of the host material being determined on the basis of the modified light,
**characterised in that** the test body is a rod (6) which encases a part of the optical fibre containing this Bragg grating and transmits the deformation of the host material directly to the Bragg grating, this extensometer furthermore comprising two anchoring means (A1 ... AN) for each Bragg grating, which are intended to anchor the test body in the host material, these two anchoring means being rigidly connected to the rod (6) and placed on either side of the Bragg grating corresponding to them, the extensometer furthermore comprising a coating (18) which covers the rod and extends between the two anchoring means placed on either side of the Bragg grating, this coating being capable of preventing the host material (2) from bonding to the rod (6).

2. Extensometer according to Claim 1, wherein each anchoring means comprises a pierced mechanical element (16), through which the rod (6) passes and which is rigidly connected to the rod.

3. Extensometer according to either of Claims 1 and 2, wherein the optical fibre (4) is made of plastic or silica.

4. Extensometer according to any one of Claims 1 to 3, wherein the optical fibre (4) comprises a protective sheath.

5. Extensometer according to any one of Claims 1 to 4, wherein the rod (6) is made of plastic.

6. Extensometer according to Claim 5, wherein this plastic contains reinforcing means.

7. Extensometer according to Claim 6, wherein these reinforcing means are glass fibres.

8. Extensometer according to any one of Claims 1 to 7, furthermore comprising two protective caps (20, 22) respectively placed at the two ends of the test body and intended for mechanical protection of these ends.

9. Method for manufacturing the extensometer according to any one of Claims 1 to 8, wherein the rod (6) is formed around the optical fibre (4) by co-extrusion.

## Patentansprüche

1. Dehnungsmesser, umfassend:
- eine optische Faser (4), in der wenigstens ein Bragg-Gitter (R1 ... RN) ausgebildet ist, und
- einen Prüfkörper, der in ein Wirtsmaterial (2) eingebettet ist, so dass durch den Prüfkörper jede Verformung des Wirtsmaterials auf dieses Bragg-Gitter übertragen wird und dieses Bragg-Gitter dann fähig ist, ein sich in der Faser ausbreitendes Licht zu modifizieren, wobei die Verformung des Wirtsmaterials aufgrund des modifizierten Lichts bestimmt wird,
**dadurch gekennzeichnet, dass** der Prüfkörper ein Stab (6) ist, der einen dieses Bragg-Gitter umfassenden Teil der optischen Faser umhüllt und die Verformung des Wirtsmaterials direkt auf das Bragg-Gitter überträgt, wobei dieser Dehnungsmesser außerdem für jedes Bragg-Gitter zwei Verankerungseinrichtungen (A1 ... AN) umfasst, die dazu bestimmt sind, den Prüfkörper in dem Wirtsmaterial zu verankern, und diese beiden Verankerungseinrichtungen starr mit dem Stab (6) verbunden sind und sich beiderseits des ihnen entsprechenden Bragg-Gitters befinden, und der Dehnungsmesser außerdem eine Beschichtung (18) umfasst, die den Stab überzieht und sich zwischen den beiden beiderseits des Bragg-Gitter befindlichen Verankerungseinrichtungen erstreckt, wobei diese Beschichtung fähig ist, zu verhindern, dass sich das Wirtsmaterial (2) mit dem Stab (6) verbindet.

2. Dehnungsmesser nach Anspruch 1, bei dem jede Verankerungseinrichtung ein durchbohrtes Element (16) umfasst, das von dem Stab (6) durchquert wird und mit diesem starr verbunden ist.

3. Dehnungsmesser nach einem der Ansprüche 1 und 2, bei dem die optische Faser (4) aus Kunststoff oder aus Siliciumdioxid ist.

4. Dehnungsmesser nach einem der Ansprüche 1 bis 3, bei dem die optische Faser (4) eine Schutzhülle aufweist.

5. Dehnungsmesser nach einem der Ansprüche 1 bis 4, bei dem der Stab (6) aus Kunststoff ist.

6. Dehnungsmesser nach Anspruch 5, bei dem dieser Kunststoff Verstärkungsmittel enthält.

7. Dehnungsmesser nach Anspruch 6, bei dem diese Verstärkungsmittel Glasfasern sind.

8. Dehnungsmesser nach einem der Ansprüche 1 bis 7, mit außerdem zwei Schutz-Endstücken (20, 22), jeweils an den beiden Enden des Prüfkörpers befindlich und zum mechanischen Schutz dieser Enden bestimmt.

9. Verfahren zur Herstellung eines Dehnungsmessers nach einem der Ansprüche 1 bis 8, bei dem der Stab (6) durch Coextrusion um die optische Faser (4) herum ausgebildet wird.
